# EUROPEAN PATENT APPLICATION

(11) **EP 2 413 258 A1**
(43) Date of publication of application: **01.02.2012**
(21) Application number: 10305838.4
(22) Date of filing: 29.07.2010
(51) Int. Cl.: G06F 21/00

(54) **A method for controlling an action performed through or by a device, corresponding first device, server, system and method**

(71) Applicant: Gemalto SA, 92190 Meudon (FR)
(72) Inventor: Susetyanto, Dody Apriyanto, 139941, SINGAPORE (SG)

(57) **Abstract**

The invention relates to a method 20 for controlling an action performed through or by a device.

According to the invention, the method comprises the following steps: a first device 12 or 14 sends to a server 18 a request 22 for registering an identifier of a second device 1110 or 112 to be controlled, the second device sends to the server data 210 relating to at least one action performed through or by the second device, and the server sends to the first device the data 214 relating to at least one action performed through or by the second device.

The invention also pertains to a corresponding server.

Moreover, the invention relates to a corresponding first device and system.

## Description

### Field of the invention:

The invention relates, in a general manner, to a method for controlling an action performed through or by a device.

Furthermore, the invention pertains to a server for controlling an action performed through or by a device.

Moreover, the invention relates to a first device for controlling an action performed through or by a second device.

Finally, the invention pertains to a system for controlling an action performed through or by a device.

### State of the art:

WO 2007/072209 describes a technique for controlling an access to services offered by a mobile telephone is based upon a use of a set of rules stored within a portable device, such as a Subscriber Identity Module card, connected to the mobile telephone. The portable device authorizes or forbids an access to a service desired by a controlled entity, such as a child, depending on whether the stored rules are or are not satisfied respectively. The rules are configured by a controller entity, such as a parent, through a web server embedded within the portable device and the concerned mobile telephone.

However, such a known solution does not allow following an action performed by the controlled entity at the mobile telephone.

Thus, there is a need to follow or survey an action performed through or by the mobile telephone of a controlled entity.

### Summary of the invention:

The invention proposes a solution for satisfying the just hereinabove specified need by providing a method for controlling an action performed through or by a device.

According to the invention, the method comprises the steps in which a first device sends to a server a request for registering an identifier of a second device to be controlled, the second device sends to the server data relating to at least one action performed by the second device, and the server sends to the first device the data relating to at least one action performed by the second device.

The principle of the invention consists in using a server interposing between a device of a controller entity (or termed first device) and a device of a controlled entity (or termed second device) that is identified at the controller entity device side, so that the device of the controller entity accesses, through the server, to one action(s) performed through or by the device of the controlled entity.

The invention solution makes it possible to be aware of a behaviour or activity of a device of a controlled entity at a device of a controller entity. Thus, the activity of the device of the controlled entity may be remotely followed or surveyed.

The proposed solution does not require that, on the one hand, the controller entity, such as a parent, catches a device of the controlled entity, such as a child, and, on the other hand, the controller entity is a person aware of any necessary technique for knowing what the controlled entity has done through or with her or his device.

A user, as a controller entity, may use the invention anywhere and anytime, so as to access, in a simple and convenient manner, to the action(s) carried out by the controlled entity through or with her or his own device.

A management from a device of a controller entity through a server thus facilitates a tracking of a behaviour of a device of a controlled entity.

The invention solution is therefore simple, convenient and user-friendly, since such a service for controlling an action performed through or by a device is accessible from a device that may be different from the device that is thus under survey.

It is to be noted that the first device and the second device may constitute one and the same device according to a particular invention embodiment. In other words, the controller entity of the device desires to know a behaviour of his own device.

According to another aspect, the invention is a server for controlling an action performed through or by a device.

According to the invention, the server is adapted to receive from a first device a request for registering an identifier of a second device to be controlled, receive from the second device data relating to at least one action performed through or by the second device, and send to the first device the data relating to at least one action performed through or by the second device.

According to yet an additional aspect, the invention is a first device for controlling an action performed through or by a second device.

According to the invention, the first device is adapted to send to a server a request for registering an identifier of a second device to be controlled, and receive from the server the data relating to at least one action performed through or by the second device.

As first or second device, it can be any apparatus including means for processing data, means for sending to and/or receiving data from outside, comprising or being connected to means for interfacing with a user, and comprising or being connected to means for storing data.

For example, the first and second devices may be, each, constituted by a mobile telephone, a smart telephone, a Personal Digital Assistant (or PDA), a tablet computer, a mobile laptop, a Personal Computer (or PC), a set-top box, a portable TeleVision (or TV) and/or a netbook.

According to still another aspect, the invention is a system for controlling an action performed through or by a device.

According to the invention, the system comprises a first device comprising means for sending to a server a request for registering an identifier of a second device to be controlled, the second device comprising means for sending to the server data relating to at least one action performed through or by the second device, and the server comprising means for sending to the first device the data relating to at least one action performed through or by the second device.

### Brief description of the drawings:

Additional features and advantages of the invention will be more clearly understandable after reading a detailed description of one preferred embodiment of the invention, given as one indicative and non-limitative example, in conjunction with the following drawings:

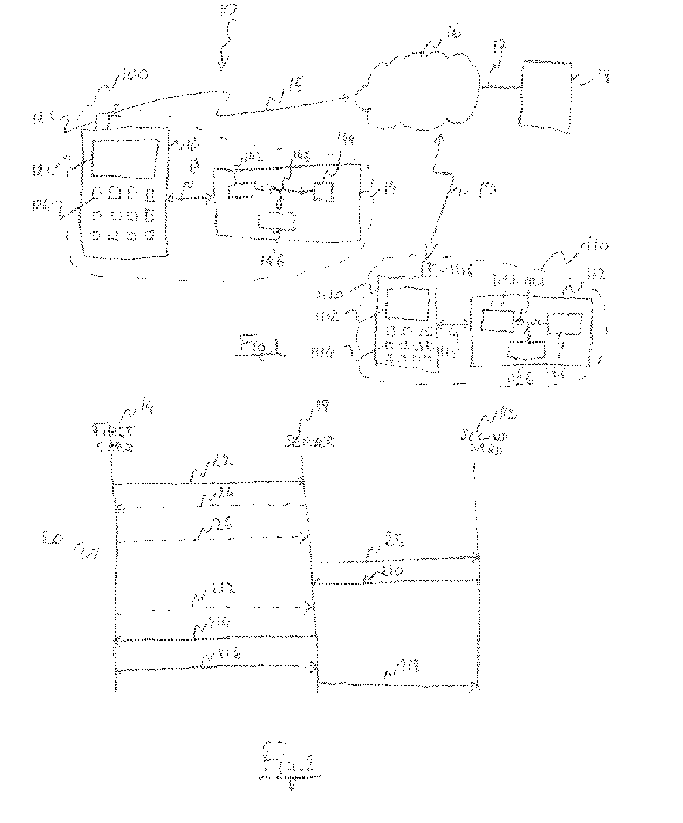

- Figure 1 represents a simplified diagram of one exemplary embodiment of a system comprising a first mobile telephone, as a first device, a first smart card, as a first portable device, a server, a second mobile telephone, as a second device, and a second smart card, as a second portable device, the system being adapted to control, from the first portable device, through the server, an action performed at the second portable device side; and
- Figure 2 shows an example of one message flow notably between the first portable device, the server, and the second portable device comprised within the system of figure 1, so as to control an activity through or by the second portable device owned by a controlled entity from the first portable device owned by a controller entity.

### Detailed description:

Herein under is considered an invention embodiment in which a portable device, such as a smart card, is coupled to a mobile telephone, as a host device of the portable device, at each side, namely at the controller entity side and at the controlled entity side.

However, the invention method for controlling an action performed through or by a device may be implemented by a first terminal of a controller entity with a second terminal of a controlled entity. In other words, according to such an embodiment (not represented), the first terminal does not cooperate with any portable device, so as to control an action performed through or by the second terminal that also does not cooperate with other any portable device. According to such an embodiment, the first and second terminals, as standalone devices, are adapted, so as to exert, on their own, the functions that are carried out by their respective portable device, as hereinafter described. In particular, each terminal is provided with an application that is configured to exchange data with a remote server in a particular manner as stated infra.

According to another embodiment (not represented), only one entity, either the controller entity or the controlled entity, has a terminal, as a standalone device, while the other entity has another terminal coupled to a portable device. According to such an embodiment, one terminal does not cooperate with any portable device and the other terminal cooperates with a portable device in the same manner that is specified hereinafter for either the controller entity or the controlled entity.

Instead of being constituted by a smart card, the portable device may be constituted by, for example, a dongle, a smart dongle of the USB (acronym for "Universal Serial Bus") type and/or any other electronic medium that may have different form factors.

According to still other examples, the portable device may also be a chip fixed, possibly in a removable manner, to a host device, or an embedded Secure Element (or SE), as a chip to be soldered within a host device.

Likewise, instead of being constituted by a mobile telephone, the terminal may be constituted by, for example, a set-top box, a PC, a tablet computer, a desktop computer, a laptop computer, a media-player, a game console, a handset, a smart phone, a netbook and/or a PDA.

Naturally, the herein below described embodiment is only for exemplifying purposes and is not considered to reduce the scope of the present invention.

Figure 1 shows schematically a system 10 for controlling, from a first mobile assembly 100, an action performed at a second mobile assembly 110.

The first and second mobile assemblies 100 and 110, as user terminals, are both to be connected, through a mobile radio-communication network 16, to a remote (Web) server 18.

The mobile radio-communication network 16 may be a GSM, UTRAN (acronym for "UMTS Terrestrial Radio Access Network"), EDGE (acronym for "Enhanced Data Rates for GSM Evolution"), GPRS (acronym for "General Packet Radio System"), WLAN (acronym for "Wide Local Area Network") CDMA and/or LTE network(s).

The mobile radio-communication network list is not exhaustive but only for exemplifying purposes and is not considered to reduce the scope of the present invention.

Naturally, the server 18 is connected to more than two mobile assemblies but, for reasons of simplicity of explanation, only two mobile assemblies 100 and 110 are represented.

The first mobile assembly 100, as an electronic communication system, includes a mobile telephone 12, as a hand-held appliance and a first device, and a Universal Integrated Circuit Card (or UICC) type smart card 14, as a first portable device.

The second mobile assembly 110, as another electronic communication system, includes another mobile telephone 1110, as a hand-held appliance and a second device, and a UICC type smart card 112, as a second portable device.

For a sake of clarity and conciseness, the mobile telephones 12 and 1110 and the UICC type smart cards 14 and 112 are termed hereinafter the first and second phones 12 and 1110 and the first and second cards 14 and 112 respectively.

A controller entity, such as a parent of one child(ren) or a employer of an employee(s), uses the first mobile assembly 100 while one child or one employee, as a controlled entity, uses the second mobile assembly 110.

The first and second mobile assemblies 100 and 110 are, each, connected, through a wireless bidirectional link 15 and 19 respectively, to the mobile radio-communication network 16.

Alternatively, instead of a mobile radio-communication network, the user terminals are connected, via a wire communication network, to the remote server 18.

The mobile radio-communication network 16 is linked, via a bi-directional wired line 17, to the server 18.

The server 18 may be operated or managed by a Mobile Network Operator (or MNO), a Mobile Virtual Network Operator (or MVNO), a banking Operator, a wire communication network operator, any service Operator or on behalf of a service Operator, as a service provider.

The server 18 addresses the first mobile assembly 100 for its user, as a controller entity, so as to follow or survey one or several actions performed at the second mobile assembly 110 by its user, as a controlled entity.

According to another embodiment (not represented), the controller entity who uses the first mobile assembly controls, through the server, a plurality of controlled entities who use the second mobile assemblies.

According to yet another embodiment (not represented), the controlled entity who uses the second mobile assembly is controlled, through the server, a plurality of controller entities who use the first mobile assemblies.

The server 18 is used for:
- registering a list of at least one identifier relating to a controller entity portable device, such as an International Mobile Subscriber Identity (or IMSI), a Session Initiation Protocol (or SIP) address and/or an email address, associated with a list of at least one identifier relating to a controlled entity portable device, such as an IMSI, a SIP address and/or an email address, and, for each pair of the first card 14 and the associated second card 112,
- uploading from the second card 112 one or several action(s) performed by the controlled entity through or by the second card 112,
- memorizing the action(s) performed by the controlled entity through or by the second card 112, and
- downloading to the first card 14 a part or all of the performed action(s).

The server 18 may select a part of the action(s) performed, through or by the second card 112, by the controlled entity while keeping only action(s) requested, through or by the first card 14, by the controller entity.

The controller entity is thus able, via the first card 14, to track a particular action(s) or all the actions performed by the controlled entity through or by the second card 112.

An action(s), that may be specific, may include at least one of the following functions:
- to set a phone call(s) while possibly specifying a phone number(s), a SIP address(es) or a phone address(es) that has(have) been reached and/or a time(s) at which the phone call(s) took place. In particular, an emergency phone number(s) may be used, such as 15 for a mobile emergency medical service, 17 for emergency services, 18 for a fire brigade and/or 112 for an emergency call in France or Europe. The emergency phone number(s) may have a dedicated phone button(s) provided within the second phone 1110;
- to send a Short Message Service (or SMS) type message(s) while possibly specifying a phone number(s), a SIP address(es) or a phone address(es) that has(have) been addressed;
- to send a Multimedia Message Service (or MMS) type message(s) while possibly specifying a phone number(s), a SIP address(es) or a phone address(es) that has(have) been addressed;
- to send an email type message(s) while possibly specifying an email address(es) that has(have) been addressed;
- to receive data from or send data to a contactless reader, such as a Near Field Communication (or NFC) type terminal while possibly identifying the contactless reader that has(have) been reached;
- to receive data from or send data to a communicating device, like an NFC enabled mobile handset configured in a peer-to-peer mode, while possibly identifying the NFC enabled mobile handset that has(have) been reached;
- to execute an application supported by the second card 112, while possibly identifying (for example with an Application IDentifier (or AID) or an application name) the executed application and/or a time at which the application is executed;
- to visit a (Web) server, while possibly identifying (for example with an Uniform Resource Locator(s) (or URL)) the visited server, a session time at which the server has been visited and/or a session time period during the server has been visited; and/or
- to occupy at least one geographical location registered within the second card 112, i.e. once the controlled entity is detected as being within a particular zone, for example, the second card 112 registers a location area code relating to a place where the controlled entity should be present, like a location area code relating to a school area.

The communicating device is an electronic apparatus which is able to communicate possibly through a communication network (be it wired or wireless). The communicating device may be, for example, a (possibly NFC enabled) mobile phone, a PDA, a smart phone (i.e. a mobile phone with a PDA capability), a tablet computer, a laptop or desktop computer.

Moreover, the controller entity of the first mobile assembly 100 may restrict, through the first card, a use of the second card 112.

Such a restriction may consist in reducing:
- a number of capabilities of the second card 112,
- a number of a use(s) of an application(s) supported by the second card 112 while limiting its(their) execution(s) to a threshold value defined by the controller entity for each concerned application and possibly disabling the application(s) that the controlled entity is not authorized by the controller entity to execute,
- a number of phone call(s),
- a phone number(s), a SIP address(es) or address(es) that the controlled entity is allowed to access,
- a number of SMS type messages that the controlled entity is allowed to send,
- a number of visit(s) of Internet site(s), and/or
- a Uniform Resource Locator(s) (or URL) of Internet site(s) which the controlled entity is allowed to access to.

Such a restriction controlled by the controller entity prevents the controlled entity from using the second card 112 beyond a use authorized by the controller entity.

According to one feature of the invention, the server 18 to be accessed has to be accessed via an initiation from either the first card 14 while identifying at least the first card 14 and preferably the second card 112 or the second card 112 while identifying at least the second card 112 and possibly the first card 14.

The server 18 has preferably a phone number to be used for accessing the server 18. The server 18 may (possibly also) have a Uniform Resource Locator (or URL) to be used for accessing the server 18.

The server 18 is used for associating a controller entity terminal identifier, such as her/his IMSI, phone number, SIP address, and/or her/his email, with one (or several) controller entity terminal identifier(s), such as her/his IMSI, phone number, SIP address, and/or her/his email.

As further explained infra with respect to the figure 2, for the described embodiment, the server 18 is used as an intermediary entity for communicating an action(s) performed through or by the second card 112 to the first card 14.

Optionally, the server 18 executes one or several security functions. The security functions include preferentially an authentication of a user of the first mobile assembly 100. During a configuration phase, the user of the first mobile assembly 100, as controller entity, enters data to be used as reference data for authenticating the user of the first mobile assembly. For example, the user gives either a Personal Identification Number (or PIN), such as four digits, or a biometric reference, such as a fingerprint or an iris image, as a code to be recognized and used for accessing an application for controlling an action performed through or by the second card 112 to be executed by the server 18. The PIN or the biometric reference to be matched is stored at the server 18.

The security functions may comprise a decryption/encryption process to be used for exchanging with the first card 14 and/or the second card 112, so as to protect an access to the data exchanged between the server 18 and the first card 14 and/or the second card 112.

Each of the first phone 12 and the second phone 1110 includes at least one microprocessor (not represented), at least one memory (not represented) and at least one Input/Output (or I/O) interface.

The phone memory stores data, an Operating System (or OS) and at least one application.

As to application(s) supported by each phone 12 or 1110, there is, among others, an application for setting a phone call, so as to initiate an outgoing phone call, through the mobile radio-communication network 16, with a phone owned by a party to be called. There is preferably at least an application for receiving a phone call, so as to take an incoming phone call. There may be an application for exchanging, through a SMS type message, with the mobile radio-communication network 16, so as to send and receive a SMS type message. There may be an application for exchanging, through a MMS type message, with the mobile radio-communication network 16, so as to send and receive a MMS type message. There may be a (Web) browser, so as to access either, through the mobile radio-communication network 16 and an Internet network (not represented) a remote (Web) server or a local server incorporated within the card coupled to the concerned phone, in order to interact with the application(s) supported by the concerned coupled card 14 or 112 and offered to the concerned phone user. There is preferably an application for sending to the server 18 a Unstructured Supplementary Service Data (or USSD) type command.

The USSD type command is a capability (of the first and second phones 12 and 1110) for transmitting information, through the mobile radio-communication network 16, over a network signalling channel(s). Such a capability is dependent on the mobile radio-communication network 16. The USSD type command is generally associated with real-time or instant messaging type phone services. The mobile radio-communication network 16 does not need to have a network element for storing and forwarding the USSD type command, unlike for a SMS type message protocol that requires a dedicated network element, namely a SMS Centre.

The phone microprocessor processes data originating from the phone memory or the phone I/O interface.

The phone microprocessor executes the application stored within the phone memory requested directly or indirectly by the phone user.

The first phone 12 and the second phone 1110 are arranged to connect, through the mobile radio-communication network 16, to the server 18, thanks to data provided by the first card 14 or the second card 112 respectively, for example, a phone number or a URL of the server 18 to be accessed.

The phone I/O interface includes an interface(s), so as to exchange data with the concerned card. The interface between the first phone 12 and the first card 14 and/or the second phone 1110 and the second card 112 may be an International Standard Organisation (or ISO) 7816 interface, as a contact interface when the card(s) 14 and/or 112 is(are) lodged within the concerned phone(s) 12 and/or 1110.

The phone I/O interface comprises preferably a display screen, a keyboard, and one antenna (or several antennas). The phone I/O interface of the first phone 12 includes a display screen 122, a keyboard 124, and one antenna 126 (or several antennas). The phone I/O interface of the second phone 1110 includes a display screen 1112, a keyboard 1114, and one antenna 1116 (or several antennas).

The display screen 122 or 1112 and the keyboard 124 or 1114 may be used for exchanging information between a phone user and the concerned phone 12 or 1110 or another entity(ies) to which the concerned phone 12 or 1110 is connected, like the first card 14 or the second card 112, and/or the server 18 to be accessed.

The antenna 126 or 1116 is arranged to let communicate, through a long range radio-frequency link 15 or 19, notably the concerned card, through the concerned phone, and the server 18.

The first card 14 and the second card 112, as portable devices, comprise, each, at least one means for processing data, such as one microprocessor(s), one means for storing data, such as one non-volatile memory(ies), and at least one I/O interface for communicating with a host device.

Each card is a smart object that has computing means with a processing that is limited, in terms of performance, with respect to the one relating to a PC, the coupled phone or the like.

Instead of a UICC type card, the first card 14 and/or the second card 112 may be a (micro) Secure Digital (or SD) type card or a Multi-Media type Card (or MMC).

The first card 14 is intended to interact with the first phone 12, in order to connect, via the mobile radio-communication network 16, to the server 18.

The first card 14 is connected to the first phone 12 via a first bi-directional link 13.

The first card 14 includes a chip comprising at least one microprocessor 142, as means for processing data, at least one memory 144, and at least one I/O interface 146 which are all linked together through a control and data bus 143.

The first card memory 144 can be constituted by one or several EEPROM (acronym for "Electrically Erasable Programmable Read-Only Memory"), one or several ROM (acronym for "Read Only Memory"), one or several Flash memories, and/or any other memories of different types, like one or several RAM (acronym for "Random Access Memory").

The first card 14 stores, preferably within a non-volatile part of the memory 144, besides a card Operating System (or OS), an application algorithm relating to a process, according to the invention, for controlling, through the server 18, an action performed through or by the second card 112. Such an application may be written in an object-oriented language, such as Java, also termed applet when developed in Java.

According to such a corresponding embodiment, the first card memory 144 has a Java Virtual Machine (or JVM) that interprets and executes the applet.

The first card 14, as secure element, stores preferably security functions.

The security functions include preferably a user authentication process to be used, in order to access the server 18 to be accessed. To authenticate the user, the first card 14 may store an application for verifying a Personal Identity Number (or PIN). The PIN is securely stored by the first card 14 and to be input by the first card 14 user, so that the first card 14 compares the input data with the stored PIN and, when the input data matches the stored PIN, authorizes a running of the application algorithm.

The security functions include preferentially an encryption/decryption process. The encryption/decryption process is to be used for exchanging, through the first phone 12, with the server 18, so as to protect an access to the data exchanged between the first card 14 and the server 18. Before sending any data, the data is encrypted with a key and an encryption algorithm.

The first card memory 144 stores preferably in a secure manner a phone number or a URL relating to the server 18 to be accessed.

The first card 14 preferably stores securely, within its memory 144, a first IMSI, as a unique number associated with all Global Service for Mobiles (or GSM), Universal Mobile Telecommunications System (or UMTS), Code Division Multiple Access (or CDMA) and/or Long Term Evolution (or LTE) type network(s) mobile phone users.

The IMSI is used to identify a subscriber in relation to one or several mobile radio-communication networks.

The first card 14 can store, within its memory 144, for example, a SIM application for a GSM network, a Universal Subscriber Identity Module (or USIM) for a UMTS network, a CDMA Subscriber Identity module (or CSIM) for a CDMA network, a Removable User Identity Module (or RUIM) for GSM, UMTS and CDMA networks, and/or an Internet protocol multimedia Services Identity Module (or ISIM) for IP Multimedia Subsystem (or IMS).

The first card microprocessor 142 controls and communicates with all the components of the first card chip, such as its memory 144 to read it and possibly write into it. The first card microprocessor 142 controls a data exchange, through the I/O interface 146, with outside, notably the first phone 12.

The first card microprocessor 142 preferentially executes, besides the card OS, the application for controlling, through the server 18, an action performed through or by the second card 112.

The security functions include preferably a user authentication process to be used, in order to access the server to be accessed. To authenticate the user, the card 14 may store an application for verifying a Personal Identity Number (or PIN). The PIN is securely stored by the card 14 and to be input by the card 14 user, so that the card 14 compares the input data with the stored PIN and, when the input data matches the stored PIN, authorizes a running of the application algorithm.

The security functions include preferentially an encryption/decryption process. The encryption/decryption process uses an algorithm for encrypting data and an algorithm for decrypting data with at least one key shared between the first card 14 and the server 18. The algorithms for encrypting/decrypting data are shared between the first card 14 and the server 18. The encryption/decryption process is to be used before sending, through the first phone 12, to the server 18, data and after receiving, through the first phone 12, from the server 18 data, so as to protect an access to the data exchanged between the first card 14 and the server 18.

The first card I/O interface 146 includes preferably an ISO 7816 interface, so as to let communicate the first card 14 and the first phone 12.

According to one particular embodiment, the first card I/O interface 146 comprises at least one Application Protocol Data Unit (or APDU) communication channel.

The first card I/O interface 146 may comprise another or other communication channel(s), such as an Internet Protocol (or IP) communication channel, a Mass Storage communication channel, and/or a Universal Serial Bus (or USB) communication channel in compliance with the USB standard specifications.

The first card I/O interface 146 is used for receiving data from or sending data to outside, namely with at least the first phone 12, through the corresponding first phone I/O interface, via the bi-directional communication link 13.

The communication between the first card 14 and the first phone 12 is used in particular to benefit from the Man Machine Interface (or MMI) of the first phone 12 and/or an access to the mobile radio-communication network 16 to which the first phone 12 may be connected.

The second card 112 is intended to interact with the second phone 1110, in order to connect, via the mobile radio-communication network 16, to the server 18.

The second card 112 is connected to the second phone 1110 via a second bi-directional link 1111.

The second card 112 includes a chip comprising at least one microprocessor 1122, as means for processing data, at least one memory 1124, and at least one I/O interface 1126 which are all linked together through a control and data bus 1123.

The second card memory 1124 can be constituted by one or several EEPROM, one or several ROM, one or several Flash memories, and/or any other memories of different types, like one or several RAM.

The second card 112 may be adapted to send automatically to the server 18 each action performed through or by the second card 112, as soon as the concerned action is carried out.

The expression "through or by the second card 112" means that the second card 112 is involved to carry out one or several functions either "through" which means that the second card 112 is indirectly involved without needing to support an application that involves the second card 112 or "by" which means that the second card 112 is directly involved and supports an application comprising the concerned function(s). When the second card 112 is indirectly involved, the application is supported by an external entity connected to the second card 112, like the second phone 1110, a communicating device or a server.

According to another embodiment, the second card is adapted to send, after a specific server request, a part or all the actions performed through or by the second card 112.

The second card 112 stores, preferably within a non-volatile part of the memory 1124, besides a card Operating System (or OS), an application algorithm relating to a process, according to the invention, for controlling an action performed through or by the second 112. The application is possibly written in an object-oriented language like an applet.

According to such an embodiment, the second card memory 1124 has a JVM that interprets and executes the applet.

The second card memory 1124 stores preferably in a secure manner a phone number or a URL relating to the server 18 to be accessed.

The second card memory 1124 stores preferably each action performed through or by the second card 112.

The second card 112 stores securely, within its memory 1124, a second IMSI, as a unique number associated with all GSM, UMTS, CDMA and/or LTE type network(s) mobile phone users.

The second card 112 can store, within its memory 1124, for example, a SIM application for a GSM network, a USIM for a UMTS network, a CSIM for a CDMA network, a RUIM for GSM, UMTS and CDMA networks, and/or an ISIM for IP Multimedia Subsystem (or IMS).

Naturally, the just aforementioned list is not exhaustive but only for exemplifying purposes and is not considered to reduce the scope of the present invention.

The second card microprocessor 1122 controls and communicates with all the components of the second card chip, such as its memory 1124 to read it and possibly write into it. The second card microprocessor 1122 controls a data exchange, through the I/O interface 1126, with outside, notably the second phone 1110.

The second card microprocessor 1122 preferentially executes, besides the card OS, the application for controlling an action performed through or by the second 112.

The second card I/O interface 1126 includes preferably an ISO 7816 interface, so as to let communicate the second card 112 and the second phone 1110.

According to one particular embodiment, the second card I/O interface 1126 comprises at least one APDU communication channel.

The second card I/O interface 1126 may comprise another or other communication channel(s), such as an IP communication channel, a MS communication channel, and/or a USB communication channel in compliance with the USB standard specifications.

The second card I/O interface 1126 is used for receiving data from or sending data to outside, namely with at least the second phone 1110, through the corresponding second phone I/O interface, via the bi-directional communication link 1111.

The second card 112 is able to initiate an action(s) by itself, in order to interact directly with the outside world, in an independent manner of the second phone 1110 and the mobile radio-communication network 16. Such a capability of interaction at the initiative of the second card 112 is also known as proactive capability.

The second card 112 is adapted to send, at its own initiative, to the second phone 1110 a proactive command for launching an application, for example, the application for sending a USSD type command.

The second card 112 is preferably arranged to request the second phone 1110 when a pre-defined event occurs to inform the second card 112 about the occurrence of the concerned event. Such a mechanism based upon an occurrence of an event defined by the second card 112 and registered within the second phone memory allows surveying a behaviour of the controlled entity at the second phone 1110, when the second phone 1110 is solicited by the controlled entity without necessarily involving the second card 112.

Figure 2 depicts an example of a message flow 20 that involves the first card 14, the server 18 and the second card 112.

It is to be noted that the first and second phones 12 and 1110 are not represented, in order to simplify the figure 2.

It is assumed in particular that the first and second cards 14 and 112 exchange data with the server 18 through their respective first and second phones 12 and 1110.

Nevertheless, according to another embodiment (not represented), the first and second cards 14 and 112 do not cooperate with their respective first and second phones 12 and 1110, as user terminals, to exchange with the server 18.

To access an application comprised within and executed by the first card 14 or the second card 112, a so-termed SIM ToolKit (or STK) type menu or a local server implemented by the concerned card 14 or 112, the card user depresses a button or a set of buttons of the corresponding coupled phone keyboard.

The method for controlling, from the controller entity, by the first card 14, an action performed by the controlled entity through or by the second card 112 involves to have a distributed application, as a software element. More exactly, each involved device supports at least one corresponding application part (or applet when developed in Java), as software element, namely the first and second cards 14 and 112 and the server 18.

Preferably, each card user, namely the controller and controlled entities, have been authenticated by their respective first and second cards 14 and 112. For example, the first and second cards 14 and 112 have checked that data input, as a PIN, by their respective card user matches the PIN stored within the corresponding first and second card memories 144 and 1124.

Firstly, a user of the first card 14, as controller entity, desires to control the activity of an entity, as controlled entity, by selecting preferably, through the MMI of the first phone 12, an application that is supported by the first card 14 for controlling an action performed by the controlled entity through or by the second card 112 to be identified. The controller entity selects such an application, for example, within a HyperText Markup Language (or HTML) type page through a local server embedded within the first card 14 or a menu of applications, like a STK menu.

The first card 14 sends, through the first phone 12, to the server 18 a request 22 for registering an identifier of the second card 112 to be controlled while accompanying the request with a phone number relating to the first card 14, as an identifier of the controller entity device. Such a request 22 for registering an identifier of the second card 112 to be controlled constitutes a request for controlling the second card 112. Such a request 22 for registering an identifier of the second card 112 to be controlled is possibly accompanied with a particular action(s) to be surveyed and defined by the controller entity, as parameter(s) of the request 22.

To do this, the first card 14 elaborates, for example, a corresponding USSD type command along with a phone number relating to the second card 112, as an identifier of the controlled entity device. The first card 14 sends to the server 18, the elaborated USSD type command while accompanying it with a phone number relating to the first card 14, as an identifier of the controller entity device. The USSD type command allows triggering an execution of an application supported by the server 18. The USSD type command format may be the following *1234*<controlled entity's phone number>#.

According to another embodiment, instead of elaborating the USSD type command by the first card 14, the controller entity enters directly, through the MMI of the first phone 12, the USSD type command and sends to the server 18 the entered the USSD type command by depressing a corresponding button.

The server 18 executes an application for controlling, by the first card 14, an action performed through or by the second card 112.

Preferentially (but not mandatorily), the server 18 sends, to the first device 14 identified by the received request 22 for registering the controlled entity card 112, a request 24 for getting credentials of the controller entity, such as username and password. Then, the controller entity enters, through the MMI of the first phone 12, her or his username accompanied with a password chosen by the controller entity as a defined password, like a four digit code. The first card 14 sends back to the server 18, as response 26 to the request 24 for user credentials, for example, a corresponding USSD type command comprising the user credentials possibly along with an identifier of the controlled entity device, while accompanying the command with an identifier of the controller entity device. The USSD type command format may be the following *1234*<controller entity's username>*<controller entity's password>*<controlled entity's phone number>#. The server 18 registers the controller entity user credentials in association with the identifiers of the controller and the controlled entity devices.

The server 18 saves at least the identifier of the controller entity device associated with the identifier of the controlled entity device.

The server 18 sends to the second card 112, as controlled entity device, a request 28 for activating an application for controlling an action performed through or by the second card 112 possibly accompanied with the particular action(s) to be surveyed and defined by the controller entity, as parameter of the request 28.

The server 18 may send to the first card 14 a confirmation (not represented) of a triggering of a monitoring of the controlled entity activity(ies) by the controller entity.

The second card 112 executes an application for controlling an action performed through or by the second 112 by surveying an activity of the controlled entity while detecting each application executed by the second phone 1110 or the second card 112. When an application is executed by the second phone 1110, the second phone 112 sends to the second card 112 corresponding information, as data relating to an action performed by the controlled entity, executed by the second phone 1110 and reported to the second card 112.

The second card 112 configures preferably the second phone 1110 by sending to it an event relating to each action performed by the controlled entity involving at least the second phone 1110 (but not the second card 112 itself), such as a visit of a server by using a browser embedded within the second phone 1110. The second phone 1110 records such event(s) and informs the second card 112, as soon as a corresponding action has been carried out by the second phone 12, by sending to the second card 112 the concerned event. If the second phone 1110 sends to the second card 112 an event that has occurred, then the second card 112 stores within its memory 1124 the event data, as an action performed through the second card 112.

The second card 112 stores within its memory 1124 data, as an action performed by the second card 112, relating to each time an application is executed by the second card microprocessor 1122, possibly with a starting time and/or a time period relating to the concerned executed application. The application executed by the second card microprocessor 1122 may be an application for setting a phone call a setting of a phone call, a sending of a SMS type message, a sending of a MMS type message, a sending of an email type message, a sending of data to a contactless reader, a receiving of data from a communicating device, an entering of data relating to at least one location occupied by the second card 112.

The second card 112 collects all the data relating to an action(s) performed through and/or by the second card 112 by storing the concerned data.

Optionally, the server 18 sends to the second card 112 a request (not represented) for retrieving data relating to an action(s) performed through or by the second card 112.

The second card 112 sends, preferably in a transparent manner to the controlled entity (i.e. without informing the controlled entity), through the second phone 1110, to the server 18 a message 210 containing data relating to all the action(s) performed through and/or by the second card 112. The sending of such a message 210 takes place, for example, at a pre-determined time at which the data traffic within the mobile radio-communication network 16 is sufficiently low, like after 9 pm.

Optionally, the first card 14 sends to the server 18 a request 212 for retrieving data relating to an action(s) performed through or by the second card 112, possibly limited to only some particular action(s) that is(are) specified by the controller entity and sent as parameter(s) of the request 212. To do this, the first card 14, after a user's selection of the application for controlling the action(s) performed by the controlled entity, elaborates, for example, a corresponding USSD type command along with a phone number relating to the second card 112, possibly accompanied with the controller entity's credentials, when applicable. The first card 14 sends to the server 18, the elaborated USSD type command while accompanying it with an identifier of the controller entity device. The USSD type command allows triggering an execution of an application supported by the server 18. The USSD type command format may be the following *1234*<controller entity's phone number>*<controller entity's password>*<controlled entity's phone number>#. According to another embodiment, instead of elaborating the USSD type command by the first card 14, the controller entity enters directly, through the MMI of the first phone 12, the USSD type command.

The server 18 sends to the first card 14, possibly after having filtered the data relating to an action(s) performed through and/or by the second card 112 and orignating from the second card 112 by selecting only some particular action(s) performed through or by the second card 112, a message 214 containing the data relating to an action(s) performed through and/or by the second card 112. Such a message 214 containing the data relating to an action(s) performed through and/or by the second card 112 may be of the SMS type message.

The controller entity is informed possibly through the MMI of the first phone 12 about the activity of the controlled entity.

The controller entity being thus aware of the activity of the controlled entity in a remote manner may decide to limit an access to an application(s) executed at the second phone 1110 side by reducing the use of the concerned application(s) while defining a threshold value of the time, the time period and/or the count relating to an execution of the application(s) or blocking the use of the concerned application(s).

To limit the access to an application(s) executed at the second phone 1110 side, the first card 18 sends to the server 18 either a request 216 for restricting a use of the second card 112 with parameter(s) relating to the concerned application(s), like an Application IDentifier (or AID), as an identifier of each concerned application, and the defined threshold value(s), or a request for disabling an application(s) embedded within either the second card 112 or the second phone 1110 with parameter(s) relating to the concerned application(s), like an AID, as an identifier of each concerned application.

Further to the first card 14 demand, the server 18 sends to the second card 112 a command 218 for either restricting a use of the second card 112 with parameter(s) relating to the concerned application(s), like an AID, as an identifier of each concerned application and the defined threshold value(s), or disabling an application(s) embedded within the second card 112 or the second phone 1110.

Then, the second card 112 limits the access to the concerned application(s), namely the one(s) identified within the command 218, by either forbidding to exceed the defined threshold value(s) for the use of the concerned application(s) or deactivating the concerned application(s). To deactivate the concerned application(s), the second card 112 either deactivates by itself the concerned application(s) when the second card 112 supports it(them) or sends to the second phone 1110 a corresponding command for deactivating the concerned application(s), when the second phone 1110 supports the concerned application(s).

A lot of amendments of the embodiment described supra may be brought without departing from the spirit of the invention. For example, instead of one message 210 with all the action(s) performed through and/or by the second card 112, the second card 112 sends one dedicated message for each particular action requested to be surveyed by the controller entity, such as a setting of an emergency phone call.

## Claims

1. A method (20) for controlling an action performed through or by a device,
**characterized in that** the method comprises the following steps:
- a first device (12 or 14) sends to a server (18) a request (22) for registering an identifier of a second device (1110 or 112) to be controlled,
- the second device sends to the server data (210) relating to at least one action performed through or by the second device, and
- the server sends to the first device the data (214) relating to at least one action performed through or by the second device.

2. Method according to claim 1, wherein the first device sends to the server data (26) relating to an identification of a user of the first device and/or an authentication of a user of the first device and wherein the server registers data relating to an identification of a user of the first device and/or an authentication of a user of the first device.

3. Method according to claim 1 or 2, wherein the server sends to the second device a request (28) for retrieving data relating to at least one action performed through or by the second device.

4. Method according to any of claims 1 to 3, wherein, the first device being coupled to a first portable device, prior to a sending, from the first device to the server, of the request for registering an identifier of a second device to be controlled, the first portable device sends to the first device the request (22) for controlling the second device.

5. Method according to any of claims 1 to 4, wherein, the second device being coupled to a second portable device, prior to a sending, from the second device to the server, of the data relating to at least one action performed through or by the second device, the second portable device sends to the second device the data (214) relating to at least one action performed through or by the second device.

6. Method according to any of claims 1 to 5, wherein the at least one action performed through or by the second device comprises at least one element of a group including:
- a setting of a phone call;
- a sending of a Short Message Service type message;
- a sending of a Multimedia Message Service type message;
- a sending of an email type message;
- a sending of data to a contactless reader;
- a receiving of data from a communicating device;
- an execution of at least one application embedded within the second device;
- a visit of a Web server;
- an entering of data relating to at least one location occupied by the second device.

7. Method according to any of claims 1 to 6, wherein the first device sends, through the server, to the second device a command (218) for restricting a use of the second device and/or a command for disabling an application executed at the second device.

8. A server (18) for controlling an action performed through or by a device, **characterized in that** the server is adapted to:
- receive from a first device (12 or 14) a request (22) for registering an identifier of a second device (1110 or 112) to be controlled,
- receive from the second device data (210) relating to at least one action performed through or by the second device, and
- send to the first device the data (214) relating to at least one action performed through or by the second device.

9. A first device (12 or 14) for controlling an action performed through or by a second device (1110 or 112),
**characterized in that** the first device is adapted to:
- send to a server (18) a request (22) for registering an identifier of a second device to be controlled, and
- receive from the server the data (214) relating to at least one action performed through or by the second device.

10. A system (10) for controlling an action performed through or by a device,
**characterized in that** the system comprises:
- a first device (12 or 14) comprising means for sending to a server (18) a request (22) for registering an identifier of a second device (1110 or 112) to be controlled,
- the second device comprising means for sending to the server data (210) relating to at least one action performed through or by the second device, and
- the server comprising means for sending to the first device the data (214) relating to at least one action performed through or by the second device.
